# EUROPEAN PATENT SPECIFICATION

(11) **EP 0 628 574 B1**
(45) Date of publication and mention of the grant of the patent: **03.12.1997**
(21) Application number: 94304055.0
(22) Date of filing: 07.06.1994
(51) Int. Cl.: C08F 4/02, C08F 4/646, C08F 10/00

(54) **Olefin polymerization catalyst and olefin polymerization process**
Katalysator und Verfahren zur Olefinpolymerisation
Catalyseur et procédé pour la polymérisation d'oléfines

(30) Priority: 07.06.1993 JP 135894/93
(43) Date of publication of application: 14.12.1994
(73) Proprietor: TOSOH CORPORATION, Yamaguchi-ken 746 (JP)
(72) Inventor: Inatomi, Kei, Yokkaichi-shi, Mie-ken (JP); Inahara, Kiyoshi, Yokkaichi-shi, Mie-ken (JP); Yano, Akihiro, Yokkaichi-shi, Mie-ken (JP); Sato, Morihiko, Yokkaichi-shi, Mie-ken (JP)
(74) Representative: Kearney, Kevin David Nicholas

(56) References cited:
- EP-A- 0 416 928
- WO-A-91/09882
- US-A- 5 171 798

## Description

### Background of the Invention:

### Field of the Invention:

The present invention relates to a catalyst for polymerization of olefin formed from a metallocene compound, an ionizing ionic compound, an organometallic compound, and an inorganic oxide in which the surface hydroxyl is substituted by halogen. The present invention also relates to a process for polymerization of olefin employing the above catalyst.

### Description of the Related Art:

Japanese Patent Application Laid-Open No. 3-197513 discloses polymerization of ethylene by use of a metallocene compound and an organoaluminum compound as the catalyst. Japanese Patent Application Laid-Open No. 3-290408 discloses production of polyethylene or ethylene copolymer by use of a zirconocene compound, an organoaluminum compound, and an organomagnesium compound. Japanese Patent Application Laid-Open No. 58-19309 (Kaminsky et al.) and other papers disclose catalysts employing a metallocene and methylaluminoxane for production of polyolefin including polypropylene with high catalytic activity. Japanese Patent Application Laid-Open No. 63-51407 discloses suspension or gas-phase polymerization of olefin with a catalyst formed from a metallocene and methylaluminoxane as the catalyst components, one or both of the catalyst components being supported on an inorganic oxide carrier such as silica. However, such catalyst systems require use of a large amount of relatively expensive methylaluminoxane to produce a polymer having industrially useful properties. Therefore, such catalyst systems have disadvantages of high cost, and a large amount of residual aluminum in the polymer, and so forth.

Recently, Japanese Patent Application Laid-Open Nos. 3-124706 and 3-207704 disclosed catalysts having high activity in polymerization of olefin including propylene, prepared by combining an ionic metallocene with an organoaluminum compound. The specifications of these patent applications show that the ionic metallocene catalyst, the main catalyst, needs to be prepared by converting a chloride of a metallocene compound into a methyl derivative by a methylating agent such as methyllithium or methylmagnesium chloride and subsequent reaction of the resulting methyl derivative with an ionizing ionic compound. However, the methyl derivatives of the metallocene compounds and the ionizing metallocene catalysts disclosed are generally unstable and can be synthesized only through several complicated steps of high technical level. Therefore, such catalyst systems involve various disadvantages such as low purity of the catalyst, low reproducibility of the preparation process, deactivation in storage and in transfer to a polymerization vessel.

Japanese Patent Application Laid-Open No. 3-234709 discloses suspension or gas-phase olefin polymerization by use of a catalyst comprising the above ionic compound supported by an inorganic oxide carrier such as silica. This catalyst system does not yet show sufficient catalytic activity, and the unstable compounds including the methyl derivative of the metallocene compound and the ionic metallocene compound can be synthesized only through several complicated steps of high technical level, disadvantageously.

WO92/01723 discloses polymerization of propylene by use of a catalyst prepared by treating a halogenated metallocene compound with an organometallic compound, and bringing the reaction product into contact with another compound to form a stable anion. The catalyst system, however, does not yet show sufficient catalytic activity, and is required to have higher activity.

After comprehensive investigation to solve the above problems, it was found by the inventors of the present invention that particulate polyolefin having excellent physical properties can be produced efficiently by polymerization of olefin by use of a catalyst prepared from a metallocene compound, an ionizing ionic compound, which is capable of causing other compounds to ionize an organometallic compound, and an inorganic oxide in which the hydroxyl on the surface thereof is substituted partly or entirely by halogen. The present invention was completed on the basis of the above findings.

### Summary of the Invention:

The present invention intends to provide a catalyst suitable for polymerisation of olefin which is prepared from a metallocene compound, an ionizing ionic compound, an organometallic compound, and an inorganic oxide in which the hydroxyl on the surface thereof is substituted partly or entirely by halogen.

The present invention also intends to provide a process for producing polyolefin with the above olefin polymerization catalyst.

The catalyst for polymerization of olefin of the present invention is prepared by bringing into contact together a metallocene compound, an ionizing ionic compound, an organometallic compound, and an inorganic oxide.

According to the present invention a catalyst for polymerisation of olefin comprises a metallocene compound, an ionizing ionic compound, an organometallic compound, and an inorganic oxide and is characterised in that the metallocene compound is represented by the general formula (1) below:

Cp₂MX₂ (1)

where each of Cp is independently a substituted or unsubstituted cyclopentadienyl, indenyl, or fluorenyl group, and both Cp may be linked together; M is titanium, zirconium, or hafnium; and each X is independently halogen, an alkoxy group, an amino group, or an amide group, and in that the ionizing ionic compound is represented by the general formula (2) below:

(C⁺)(A⁻) (2)

where (C⁺) is a cation, which may be inorganic for example an alkali metal or an alkaline earth metal or an organic cation, and (A⁻) is an anion, and in that the organometallic compound is represented by the general formula (3) below:

M'R₃ (3)

where M' is a metal capable of forming an M'-R bond which is reactive to M-X bonding of the metallocene compound, and each R is independently a hydrocarbon group, halogen, hydrogen, an amino group, an alkoxy group, or an aryl group, at least one R being a hydrocarbon group, and in that the inorganic oxide has surface hydroxyl substituted partly or entirely by halogen.

The process of polymerization of the present invention polymerizes an olefin in the presence of the above olefin polymerization catalyst.

### Detailed Description of the Preferred Embodiment:

The metallocene compound as a component of the catalyst of the present invention is the one represented by the general formula (1) above. In the formula, M is titanium, zirconium, or hafnium, and X is independently halogen, an alkoxy group, an amino group, or an amide group.

Specific examples of the metallocene compound which has chlorine as the group X include:
bis(cyclopentadienyl)titanium dichloride,
bis(cyclopentadienyl)zirconium dichloride,
bis(cyclopentadienyl)hafnium dichloride,
bis(methylcyclopentadienyl)titanium dichloride,
bis(methylcyclopentadienyl)zirconium dichloride,
bis(methylcyclopentadienyl)hafnium dichloride,
bis(butylcyclopentadienyl)titanium dichloride,
bis(butylcyclopentadienyl)zirconium dichloride,
bis(butylcyclopentadienyl)hafnium dichloride,
ethylenebis(indenyl)titanium dichloride,
ethylenebis(indenyl)zirconium dichloride,
ethylenebis(indenyl)hafnium dichloride,
isopropylidene(cyclopentadienyl-1-fluorenyl)titanium dichloride,
isopropylidene(cyclopentadienyl-1-fluorenyl)zirconium dichloride,
isopropylidene(cyclopentadienyl-1-fluorenyl)hafnium dichloride,
dimethylsilanediylbis(2,4,5-trimethylcyclopentadienyl)-titanium dichloride,
dimethylsilanediylbis(2,4-dimethylcyclopentadienyl)-titanium dichloride,
dimethylsilanediylbis(3-methylcyclopentadienyl)titanium dichloride,
dimethylsilanediylbis(4-t-butyl,2-methylcyclopentadienyl)titanium dichloride,
dimethylsilanediylbis(indenyl)titanium dichloride,
dimethylsilanediylbis(2,4,5-trimethylcyclopentadienyl)zirconium dichloride,
dimethylsilanediylbis(2,4-dimethylcyclopentadienyl)zirconium dichloride,
dimethylsilanediylbis(3-methylcyclopentadienyl)zirconium dichloride,
dimethylsilanediylbis(4-t-butyl,2-methylcyclopentadienyl)zirconium dichloride,
dimethylsilanediylbis(indenyl)zirconium dichloride,
dimethylsilanediylbis(2,4,5-trimethylcyclopentadienyl)hafnium dichloride,
dimethylsilanediylbis(2,4-dimethylcyclopentadienyl)hafnium dichloride,
dimethylsilanediylbis(3-methylcyclopentadienyl)hafnium dichloride,
dimethylsilanediylbis(4-t-butyl,2-methylcyclopentadienyl)hafnium dichloride,
dimethylsilanediylbis(indenyl)hafnium dichloride,
diphenylsilanediylbis(2,4,5-trimethylcyclopentadienyl)titanium dichloride,
diphenylsilanediylbis(2,4-dimethylcyclopentadienyl)titanium dichloride,
diphenylsilanediylbis(3-methylcyclopentadienyl)titanium dichloride,
diphenylsilanediylbis(4-t-butyl,2-methylcyclopentadienyl)titanium dichloride,
diphenylsilanediylbis(indenyl)titanium dichloride,
diphenylsilanediylbis(2,4,5-trimethylcyclopentadienyl)zirconium dichloride,
diphenylsilanediylbis(2,4-dimethylcyclopentadienyl)zirconium dichloride,
diphenylsilanediylbis(3-methylcyclopentadienyl)zirconium dichloride,
diphenylsilanediylbis(4-t-butyl,2-methylcyclopentadienyl)zirconium dichloride,
diphenylsilanediylbis(indenyl)zirconium dichloride,
diphenylsilanediylbis(2,4,5-trimethylcyclopentadienyl)hafnium dichloride,
diphenylsilanediylbis(2,4-dimethylcyclopentadienyl)hafnium dichloride,
diphenylsilanediylbis(3-methylcyclopentadienyl)hafnium dichloride,
diphenylsilanediylbis(4-t-butyl,2-methylcyclopentadienyl)hafnium dichloride,
diphenylsilanediylbis(indenyl)hafnium dichloride,
and the like.

Of the above examples of the metallocene, particularly preferred in view of their activity are:
dimethylsilanediylbis(2,4,5-trimethylcyclopentadienyl)titanium dichloride,
dimethylsilanediylbis(2,4-dimethylcyclopentadienyl)titanium dichloride,
dimethylsilanediylbis(3-methylcyclopentadienyl)titanium dichloride,
dimethylsilanediylbis(4-t-butyl,2-methylcyclopentadienyl)titanium dichloride,
dimethylsilanediylbis(indenyl)titanium dichloride,
dimethylsilanediylbis(2,4,5-trimethylcyclopentadienyl)zirconium dichloride,
dimethylsilanediylbis(2,4-dimethylcyclopentadienyl)zirconium dichloride,
dimethylsilanediylbis(3-methylcyclopentadienyl)zirconium dichloride,
dimethylsilanediylbis(4-t-butyl,2-methylcyclopentadienyl)zirconium dichloride,
dimethylsilanediylbis(indenyl)zirconium dichloride,
dimethylsilanediylbis(2,4,5-trimethylcyclopentadienyl)hafnium dichloride,
dimethylsilanediylbis(2,4-dimethylcyclopentadienyl)hafnium dichloride,
dimethylsilanediylbis(3-methylcyclopentadienyl)hafnium dichloride,
dimethylsilanediylbis(4-t-butyl,2-methylcyclopentadienyl)hafnium dichloride,
dimethylsilanediylbis(indenyl)hafnium dichloride,
diphenylsilanediylbis(2,4,5-trimethylcyclopentadienyl)titanium dichloride,
diphenylsilanediylbis(2,4-dimethylcyclopentadienyl)titanium dichloride,
diphenylsilanediylbis(3-methylcyclopentadienyl)titanium dichloride,
diphenylsilanediylbis(4-t-butyl,2-methylcyclopentadienyl)titanium dichloride,
diphenylsilanediylbis(indenyl)titanium dichloride,
diphenylsilanediylbis(2,4,5-trimethylcyclopentadienyl)zirconium dichloride,
diphenylsilanediylbis(2,4-dimethylcyclopentadienyl)zirconium dichloride,
diphenylsilanediylbis(3-methylcyclopentadienyl)zirconium dichloride,
diphenylsilanediylbis(4-t-butyl,2-methylcyclopentadienyl)zirconium dichloride,
diphenylsilanediylbis(indenyl)zirconium dichloride,
diphenylsilanediylbis(2,4,5-trimethylcyclopentadienyl)hafnium dichloride,
diphenylsilanediylbis(2,4-dimethylcyclopentadienyl)hafnium dichloride,
diphenylsilanediylbis(3-methylcyclopentadienyl)hafnium dichloride,
diphenylsilanediylbis(4-t-butyl,2-methylcyclopentadienyl)hafnium dichloride, and
diphenylsilanediylbis(indenyl)hafnium dichloride.

Of the compounds in which X is other than chlorine, the ones corresponding to the above chlorides are mentioned as the examples of the metallocene. However, the metallocene compound of the general formula (1) is not limited to the above-mentioned compounds.

The ionizing ionic compound employed in the present invention is represented by the general formula (2). In the formula, (C⁺) preferably includes organic cations such as ones having an active proton, such as Brønsted acids, for example trimethylammonium, triethylammonium, tripropylammonium, tributylammonium, N,N-dimethylanilinium, N,N-diethylanilinium,, N,N-2,4,5-pentamethylanilinium, triphenylphosphonium, tri(o-tolyl)phosphonium, tri(p-tolyl)phosphonium, tri(mesityl)phosphonium or oxonium as well as organic cations which do not have an active proton, such as carbonium, and sulfonium cations for example triphenylcarbenium (⁺C(C₆H₅)₃), and tropylium (⁺C₇H₇), but is not limited thereto.

In the formula (2), (A⁻) is an anion, and is preferably exemplified by a bulky non-coordinated anion such as (AlR₄⁻), (BR₄⁻), (PR₆⁻), and (ClO₄⁻); specifically including tetraphenylborate, tetra(pentafluorophenyl)borate, tetra(otetra(o-fluorophenyl)borate, tetra(p-fluorophenyl)borate, tetra(m-fluorophenyl)borate, tetra(3,5-difluorophenyl)borate, tetra(2,5-difluorophenyl)borate, tetra(2,6-difluorophenyl)borate, tetra(o-tolyl)borate, tetra(p-tolyl)borate, tetra(3,5-dimethylphenyl)borate, tetra(2,5-dimethylphenyl)borate, octadecaborate, dodecaborate, 1-carba-undecaborate, 1-carba-dodecaborate, and the like.

Examples of the PR₆⁻ anion include hexafluorophosphates such as tri(n-butyl)ammonium hexafluorophosphate, N,N-dimethylanilinium hexafluorophosphate, sodium hexafluorophosphate, and bis(cyclopentadienyl)ferrocenium hexafluorophosphate.

Some examples of halate includes perchlorates such as tri(n-butyl)ammonium perchlorate, N,N-dimethylanilinium perchlorate, sodium perchlorate, and bis(cyclopentadienyl)ferrocenium perchlorate.

The ionizing compound is exemplified specifically by dimethylanilinium tetrakispentafluorophenylborate, triphenylcarbenium tetrakispentafluorophenylborate, tropylium tetrakispentafluorophenylboreate, etc., but is not limited thereto.

The organometallic compound employed in the present invention is represented by the general formula (3). In the formula, M' is a metal capable of forming an M'-R bond which is reactive to the M-X bond of the aforementioned metallocene. The metal includes alkali metals, alkaline earth metals, transition metals, aluminum, silicon, germanium, and the like. Each R is independently a hydrocarbon group, hydrogen, halogen, an amino group, an alkoxy group, or an aryl group, and at least one R is a hydrocarbon group.

Specific examples of the organometallic compound in which M' is aluminum include trimethylaluminum, triethylaluminum, tri-n-propylaluminum, triisopropylaluminum, tri-n-butylaluminum, triisobutylaluminum, tri-t-butylaluminum, triamylaluminum, dimethylaluminum chloride, diethylaluminum chloride, diisobutylaluminum chloride, di-t-butylaluminum chloride, diamylaluminum chloride, methylaluminum dichloride, ethylaluminum dichloride, isobutylaluminum dichloride, t-butylaluminum dichloride, amylaluminum dichloride, etc., but are not limited thereto.

The inorganic oxide employed in the present invention is preferably porous fine-powdered oxide having an average particle diameter of preferably from 1 to 300 µm (micrometres), more preferably from 10 to 100 µm, specifically including oxides of typical elements such as silicon, aluminium and magnesium for example silica, alumina, and magnesia; oxides of transition metals such as titanium and zirconium for example titania, and zirconia; double oxides such as silica-alumina, and silica-magnesia; and the like. Such solid inorganic oxides usually contain, as an impurity, salts of alkali metals and alkaline earth metals, e.g. Na₂O, K₂CO₃, BaSO₄ etc. The above porous fine-powdered solid inorganic oxide may be used without the impurity being removed. Preferably, however, the impurity is removed from the solid inorganic oxide before use. The properties of the porous fine-powdered solid inorganic oxide depend on the kind of the compound and the process of production thereof. In the present invention, the inorganic oxide has a specific surface area of preferably from 10 to 1000 m²/g, more preferably from 50 to 800 m²/g, and a pore volume of preferably from 0.1 to 3 cm³/g as measured by the BET method (general method) in a nitrogen atmosphere.

The substitution of the hydroxyl of the inorganic oxide with halogen is conducted, for example, by reaction of the surface hydroxyl with a reagent having halogen capable of substituting the hydroxyl. The reagent may include halogens such as fluorine, chlorine, bromine, and iodine; hydrogen halides such as hydrogen fluoride, hydrogen chloride, hydrogen bromide, and hydrogen iodide; halogen-containing compounds such as phosgene, thionyl chloride, ammonium fluoride, ammonium chloride, and ammonium iodide, but is not limited thereto.

The inorganic oxide in which the hydroxyl is partly or entirely substituted by halogen is desirably subjected to heat treatment, as required, at a temperature of from 100 to 1000°C, preferably from 300 to 900°C at a reduced pressure or under a gas stream. The inorganic oxide may be brought into contact with a metallic compound before contact with the other catalyst components. The metallic compound used here is preferably an organometallic compound, more preferably an organoaluminum compound, but is not limited thereto. The inorganic oxide may be brought into contact with the above metallic compound by any method. For example, the substances may be brought into contact in suspension in an organic solvent in which the oxide is insoluble and the metallic compound is soluble, or in an organic solvent in which both substances are soluble; or otherwise the substances may be brought into contact with each other in substantial absence of a solvent for example by means of a ball mill.

The method of contact of the catalyst components is not critical. Preferably, one or more of the metallocene compound, the ionizing ionic compound, and the the organometallic compound are supported on the inorganic oxide which has the surface hydroxyl substituted by halogen. The method of support includes, for example, impregnation in a solvent, pulverization-mixing by means of a ball mill, gas phase treatment under vacuum, and so forth. In the case where two or more of the catalyst components are supported on the supporting inorganic oxide, the respective components may be successively deposited on the oxide by the aforementioned method, or otherwise the components may be simultaneously deposited. The catalyst components may also be immobilized by preliminary polymerization.

The molar ratio of the metallocene compound and the ionizing ionic compound in the preparation of the catalyst of the present invention is not critical. molar ratio of the metallocene compound to the ionizing the ionizing ionic compound, however, is preferably in the range of from 1:0.01 1:1000, more preferably from 1:0.2 to to 1:100. The amount of the organometallic compound is not critical. Preferably, the molar ratio of compound to the organometallic compound is the metallocene in the range of from 1:0.1 to 1:10000.

Olefins which are polymerizable in the present invention includes α-olefins such as ethylene, propylene, 1-butene, 4-methyl-1-pentene, and 1-hexene; conjugated and unconjugated dienes such as butadiene, and 1,4-hexadiene; styrene; cyclic olefins such as cyclobutene; and so forth, and mixtures of two or more thereof.

The polymerization of olefin in the present invention may be conducted either in the liquid phase or in the gas phase. The solvent for the liquid phase polymerization may be any conventionally used organic solvent, specifically including benzene, toluene, xylene, pentane, hexane and methylene chloride, or otherwise the olefin itself.

The polymerization temperature is preferably in the range of from -100°C to 230°C, but is not limited thereto.

The present invention will now be described more specifically by reference to examples without limiting the invention thereto in any way.

The "xylene-soluble matter content" (hereinafter referred to as "Xy"), which is a measure of regularity, is measured as follows. 4 grams of a polymer is dissolved in 200 ml of xylene, and the solution is kept standing at 25°C in a thermostat for one hour. The precipitate is removed by filtration. The filtrate is recovered and the xylene is evaporated off. The evaporation residue is dried in vacuo. The ratio of the dried matter to the original sample represents the xylene-soluble matter content.

### Example 1

The procedures of polymerization, reaction, and solvent purification were conducted in an inert atmosphere. The solvent used in the reaction was purified, dried, and/or deoxygenated preliminarily in a conventional method. The compounds used in the reactions were synthesized and identified by conventional methods.

### (Preparation of Solid Catalyst Components)

Into a 300-ml glass vessel, were placed 5.0 g of γ-alumina which had been subjected to fluoride treatment with NH₄F (calcined at 900°C for 6 hours), 10.4 ml of trimethylaluminum solution in toluene (20 % by weight), and 50 ml of toluene. The mixture was treated for one hour at room temperature, and further at 80°C for one hour. Then the supernatant liquid was removed by decantation. The resulting solid was washed with toluene until no unreacted trimethylaluminum was detected in the washings.

In a 300-ml glass vessel, were placed 2.0 g of the above treated fluoride-treated alumina, 37 mg of ethylene-bis(indenyl)zirconium dichloride, 340 mg of (PhNMe₂H)(B(C₆F₅)₄), 81 mg of triethylaluminum, and 100 ml of toluene, and the mixture was allowed to react at room temperature for 60 minutes. The supernatant liquid was removed by decantation, and the solid matter was washed with 80 ml of toluene. The resulting solid was dried at a reduced pressure. The solid catalyst component (1) produced contained 0.5 % by weight of zirconium, and 0.1 % by weight of boron.

### (Polymerization of Propylene)

In a 2-liter autoclave, 500 ml of toluene and 0.15 mmol of triisobutylaluminum were stirred for 10 minutes. To this solution in the autoclave, were charged 32 mg of the solid catalyst component (1) obtained above, and a solution of 0.15 mmol of triisobutylaluminum in 20 ml of toluene. Further thereto, 1000 ml of propylene was charged, and polymerization of propylene was allowed to proceed at 80°C for 30 minutes.

Polypropylene was obtained in a yield of 36 g. The polymerization activity corresponded to 44 kg/mmol-Zr.hr. The polypropylene had Xy of 14.8 %, a melting point of 127°C, and a heat of fusion of 87 J/g.

### Comparative Example 1

### (Preparation of Solid Catalyst Component)

The catalyst was prepared in the same manner as in Example 1 except that γ-alumina (calcined at 900°C for 6 hours) was used in place of the NH₄F-treated alumina described in "preparation of solid catalyst component" in Example 1. The solid catalyst component (1C) produced contained zirconium at a content of 0.3 % by weight, and boron at a content of 0.2 % by weight.

### (Polymerization of Propylene)

In a 2-liter autoclave, 500 ml of toluene and 0.15 mmol of triisobutylaluminum were stirred for 10 minutes. To this solution in the autoclave, were charged 28 mg of the solid catalyst component (1C) prepared above, and a solution of 0.15 mmol of triisobutylaluminum in 20 ml of toluene. Further thereto, 1000 ml of propylene was charged, and polymerization of propylene was allowed to proceed at 80°C for 30 minutes.

Polypropylene was obtained in a yield of 8.3 g. The polymerization activity corresponded to 21 kg/mmol-Zr.hr. The polypropylene had Xy of 11.3 %, a melting point of 127°C, and a heat of fusion of 93 J/g.

### Example 2

### (Polymerization of Ethylene)

In a 2-liter autoclave, 500 ml of toluene and 0.75 mmol of triisobutylaluminum were stirred for 10 minutes. To this solution in the autoclave, were charged 30 mg of the solid catalyst component (1) obtained in "preparation of solid catalyst component" in Example 1, and a solution of 0.15 mmol of triisobutylaluminum in 20 ml of toluene. Further thereto, ethylene was fed to keep the internal pressure of the autoclave at 392 kPaG (4 kg/cm²G), and polymerization of ethylene was allowed to proceed at 80°C for 30 minutes.

Polyethylene was obtained in a yield of 61 g. The polymerization activity corresponded to 79 kg/mmol-Zr.hr.

### Comparative Example 2

### (Polymerization of Ethylene)

In a 2-liter autoclave, 500 ml of toluene and 0.75 mmol of triisobutylaluminum were stirred for 10 minutes. To this solution in the autoclave, were charged 28 mg of the solid catalyst component (1C) obtained in "preparation of solid catalyst component" in Comparative Example 1, and a solution of 0.15 mmol of triisobutylaluminum in 20 ml of toluene. Further thereto, ethylene was fed to keep the internal pressure of the autoclave at 392 kPaG (4 kg/cm²G), and polymerization of ethylene was allowed to proceed at 80°C for 30 minutes.

Polyethylene was obtained in a yield of 23 g. The polymerization activity corresponded to 59 kg/mmol-Zr.hr.

### Example 3

### (Preparation of Solid Catalyst Component)

The catalyst was prepared in the same manner in Example 1 except that dimethylsilanediylbis(2,4-dimethylcyclopentadienyl)zirconium dichloride was used in place of ethylenebis(indenyl)zirconium dichloride in "preparation of solid catalyst component" in Example 1. The solid catalyst component (3) contained zirconium at a content of 0.4 % by weight, boron at a content of 0.1 % by weight.

### (Polymerization of Propylene)

In a 2-liter autoclave, 500 ml of toluene and 0.15 mmol of triisobutylaluminum were stirred for 10 minutes. To this solution in the autoclave, were charged 16 mg of the solid catalyst component (3) obtained in the above "preparation of solid catalyst component", and a solution of 0.15 mmol of triisobutylaluminum in 20 ml of toluene. Further thereto, 1000 ml of propylene was charged, and polymerization of propylene was allowed to proceed at 60°C for 30 minutes.

Polypropylene was obtained in a yield of 460 g. The polymerization activity corresponded to 1300 kg/mmol-Zr.hr. The polypropylene had Xy of 2.2 %, a melting point of 150°C, and a heat of fusion of 130 J/g.

### Comparative Example 3

### (Polymerization of Propylene)

In a 2-liter autoclave, were placed 500 ml of toluene, 0.30 mmol of triisobutylaluminum, and 0.16 mg of dimethylsilanediylbis(2,4-dimethylcyclopentadienyl)zirconium dichloride. Further thereto, a solution of 1.6 mg of (PhNMe₂H)(B(C₆F₅)₄) in 10ml of toluene was added. No oxide was used in this example. The solution was stirred for several minutes. Into the autoclave, 1000 ml of propylene was charged, and polymerization of propylene was allowed to proceed at 60°C for 30 minutes.

Polypropylene was obtained in a yield of 39 g. The polymerization activity corresponded to 195 kg/mmol-Zr.hr. The polypropylene had Xy of 1.3 %, a melting point of 152°C, and a heat of fusion of 124 J/g.

### Example 4

### (Polymerization of Ethylene)

In a 2-liter autoclave, 500 ml of toluene and 0.75 mmol of triisobutylaluminum were stirred for 10 minutes. To this solution in the autoclave, were charged 28 mg of the solid catalyst component (3) obtained in "preparation of solid catalyst component" in Example 3, and a solution of 0.15 mmol of triisobutylaluminum in 20 ml of toluene. Further thereto, ethylene was fed to keep the internal pressure of the autoclave at 392 kPaG (4 kg/cm²G), and polymerization of ethylene was allowed to proceed at 80°C for 30 minutes.

Polyethylene was obtained in a yield of 34 g. The polymerization activity corresponded to 76 kg/mmol-Zr.hr.

The catalyst of the present invention, which is prepared by contact of a metallocene compound, an ionizing ionic compound, an organometallic compound, and an inorganic oxide in which the surface hydroxyl is partly or entirely substituted by halogen, gives polyolefin having excellent physical properties efficiently in a well-regulated powder shape.

## Claims

1. A catalyst for polymerisation of olefin comprising a metallocene compound, an ionizing ionic compound, an organometallic compound, and an inorganic oxide characterised in that the metallocene compound is represented by the general formula (1) below:
Cp₂MX₂ (1)
where each of Cp is independently a substituted or unsubstituted cyclopentadienyl, indenyl, or fluorenyl group, and both Cp may be linked together; M is titanium, zirconium, or hafnium; and each X is independently halogen, an alkoxy group, an amino group, or an amide group, and in that the ionizing ionic compound is represented by the general formula (2) below:
(C⁺)(A⁻) (2)
where (C⁺) is a cation, and (A⁻) is an anion, and in that the organometallic compound is represented by the general formula (3) below:
M'R₃ (3)
where M' is a metal capable of forming M'-R bond which is reactive to M-X bonding of the metallocene compound, and each R is independently a hydrocarbon group, halogen, hydrogen, an amino group, an alkoxy group, or an aryl group, at least one R being a hydrocarbon group, and in that the inorganic oxide has surface hydroxyl substituted partly or entirely by halogen.

2. A method of preparing a catalyst for polymerisation of olefin, characterised in that it comprises bringing into contact together a metallocene compound, an ionizing ionic compound, an organometallic compound, and an inorganic oxide: the metallocene compound being represented by the general formula (1) below:
Cp₂MX₂ (1)
where each of Cp is independently a substituted or unsubstituted cyclopentadienyl, indenyl, or fluorenyl group, and both Cp may be linked together; M is titanium, zirconium, or hafnium; and each X is independently halogen, an alkoxy group, an amino group, or an amide group,
the ionising ionic compound being represented by the general formula (2) below:
(C⁺)(A⁻) (2)
where (C⁺) is a cation, and (A⁻) is an anion,
the organometallic compound being represented by the general formula (3) below:
M'R₃ (3)
where M' is a metal capable of forming M'-R bond which is reactive to M-X bonding of the metallocene compound, and each R is independently a hydrocarbon group, halogen, hydrogen, an amino group, an alkoxy group, or an aryl group, at least one R being a hydrocarbon group, and the inorganic oxide having surface hydroxyl substituted partly or entirely by halogen.

3. A process for polymerisation of olefins, characterised in that it comprises polymerising the olefin in the presence of a catalyst as claimed in claim 1.

## Patentansprüche

1. Katalysator zur Olefinpolymerisation, umfassend eine Metallocenverbindung, eine ionisierende ionische Verbindung, eine organometallische Verbindung und ein anorganisches Oxid, dadurch gekennzeichnet, daß die Metallocenverbindung durch die nachstehende allgemeine Formel (1) wiedergegeben wird:
Cp₂MX₂ (1)
in der jeder Rest Cp unabhängig voneinander für einen substituierten oder unsubstituierten Cyclopentadienyl-, Indenyl- oder Fluorenylrest steht, und beide Cp-Reste miteinander verbunden sein können; M für Titan, Zirkon oder Hafnium steht; und jeder Rest X unabhängig voneinander für ein Halogenatom, einen Alkoxyrest, eine Amino- oder eine Amidgruppe steht; und daß die ionisierende ionische Verbindung durch die nachstehende allgemeine Formel (2) wiedergegben wird:
(C⁺)(A⁻) (2)
in der (C⁺) ein Kation ist, und (A⁻) ein Anion ist; und daß die organometallische Verbindung durch die nachstehende allgemeine Formel (3) wiedergegeben wird:
M'R₃ (3)
in der M' ein Metall ist, das eine M'-R-Bindung erzeugen kann, die gegenüber der M-X-Bindung der Metallocenverbindung reaktiv ist, und jeder Rest R unabhängig voneinander für einen Kohlenwasserstoffrest, ein Halogen-, Wasserstoffatom, eine Aminogruppe, einen Alkoxy- oder einen Arylrest steht, wobei wenigstens ein Rest R ein Kohlenwasserstoffrest ist; und daß das anorganische Oxid teilweise oder vollständig durch Halogenatome substituierte Hydroxylgruppen auf der Oberfläche aufweist.

2. Verfahren zur Herstellung eines Katalysators zur Olefinpolymerisation, dadurch gekennzeichnet, daß es Inkontaktbringen einer Metallocenverbindung, einer ionisierenden ionischen Verbindung, einer organometallischen Verbindung und eines anorganischen Oxids umfaßt, wobei die Metallocenverbindung durch die nachstehende allgemeine Formel (1) wiedergegeben wird:
Cp₂MX₂ (1)
in der jeder Rest Cp unabhängig voneinander für einen substituierten oder unsubstituierten Cyclopentadienyl-, Indenyl- oder Fluorenylrest steht, und beide Cp-Reste miteinander verbunden sein können; M für Titan, Zirkon oder Hafnium steht; und jeder Rest X unabhängig voneinander für ein Halogenatom, einen Alkoxyrest, eine Amino- oder eine Amidgruppe steht; wobei die ionisierende ionische Verbindung durch die nachstehende allgemeine Formel (2) wiedergegeben wird:
(C⁺)(A⁻) (2)
in der (C⁺) ein Kation ist, und (A⁻) ein Anion ist; wobei die organometallische Verbindung durch die nachstehende allgemeine Formel (3) wiedergegeben wird:
M'R₃ (3)
in der M' ein Metall ist, das eine M'-R-Bindung erzeugen kann, die gegenüber der M-X-Bindung der Metallocenverbindung reaktiv ist, und jeder Rest R unabhängig voneinander für einen Kohlenwasserstoffrest, ein Halogen-, Wasserstoffatom, eine Aminogruppe, einen Alkoxy- oder einen Arylrest steht, wobei wenigstens ein Rest R ein Kohlenwasserstoffrest ist; und wobei das anorganische Oxid teilweise oder vollständig durch Halogenatome substituierte Hydroxylgruppen auf der Oberfläche aufweist.

3. Verfahren zur Olefinpolymerisation, dadurch gekennzeichnet, daß es Polymerisieren des Olefins in Gegenwart eines Katalysators nach Anspruch 1 umfaßt.

## Revendications

1. Catalyseur pour la polymérisation d'une oléfine comprenant un composé métallocène, un composé ionique ionisant, un composé organométallique, et un oxyde inorganique, caractérisé en ce que le composé métallocène est représenté par la formule générale (1) ci-dessous:
Cp₂MX₂ (1)
dans laquelle chacun des Cp est indépendamment un groupe cyclopentadiényle, indényle ou fluorényle substitué ou non substitué, et les deux Cp peuvent être liés ensemble; M est le titane, le zirconium ou le hafnium; et chaque X est indépendamment un halogène, un groupe alcoxy, un groupe amino ou un groupe amide, et en ce que le composé ionique ionisant est représenté par la formule générale (2) ci-dessous:
(C⁺)(A⁻) (2)
où (C⁺) est un cation et (A⁻) est un anion, et en ce que le composé organométallique est représenté par la formule générale (3) ci-dessous:
M'R₃ (3)
où M' est un métal capable de former une liaison M'-R qui est réactive avec la liaison M-X du composé métallocène, et chaque R est indépendamment un groupe hydrocarbure, un halogène, un hydrogène, un groupe amino, un groupe alcoxy, ou un groupe aryle, au moins un R étant un groupe hydrocarbure, et en ce que l'oxyde inorganique a un hydroxyle de surface partiellement ou entièrement substitué par un halogène.

2. Procédé de préparation d'un catalyseur pour la polymérisation d'une oléfine, caractérisé en ce qu'il comprend le fait de mettre en contact en même temps un composé métallocène, un composé ionique ionisant, un composé organométallique et un oxyde inorganique: le composé métallocène étant représenté par la formule générale (1) ci-dessous:
Cp₂MX₂ (1)
dans laquelle chacun des Cp est indépendamment un groupe cyclopentadiényle, indényle ou fluorényle substitué ou non substitué, et les deux Cp peuvent être liés ensemble; M est le titane, le zirconium ou le hafnium; et chaque X est indépendamment un halogène, un groupe alcoxy, un groupe amino ou un groupe amide,
le composé ionique ionisant étant représenté par la formule générale (2) ci-dessous:
(C⁺)(A⁻) (2)
où (C⁺) est un cation et (A⁻) est un anion,
le composé organométallique étant représenté par la formule générale (3) ci-dessous:
M'R₃ (3)
où M' est un métal capable de former une liaison M'-R qui est réactive avec la liaison M-X du composé métallocène, et chaque R est indépendamment un groupe hydrocarbure, un halogène, un hydrogène, un groupe amino, un groupe alcoxy, ou un groupe aryle, au moins un R étant un groupe hydrocarbure, et l'oxyde inorganique ayant un hydroxyle de surface partiellement ou entièrement substitué par un halogène.

3. Procédé pour la polymérisation des oléfines, caractérisé en ce qu'il comprend le fait de polymériser l'oléfine en présence d'un catalyseur tel que revendiqué dans la revendication 1.
